# EUROPÄISCHE PATENTSCHRIFT

(11) **EP 4 571 037 B1**
(45) Veröffentlichungstag und Bekanntmachung des Hinweises auf die Patenterteilung: **09.09.2026**
(21) Anmeldenummer: 23217263.5
(22) Anmeldetag: 15.12.2023
(51) Int. Cl.: E06B 9/72, H01R 13/631, H02K 5/22

(54) **SONNENSCHUTZANLAGE MIT AM MOTOR ANGEFLANSCHTER STEUEREINHEIT**
SUN PROTECTION SYSTEM WITH A CONTROL UNIT FLANGED TO THE MOTOR
INSTALLATION DE PROTECTION SOLAIRE DOTÉE D'UNE UNITÉ DE COMMANDE FIXÉE AU MOTEUR

(43) Veröffentlichungstag der Anmeldung: 18.06.2025
(73) Patentinhaber: Weinor GmbH & Co. KG, 50829 Köln (DE)
(72) Erfinder: Stawski, Karl-Heinz, 50769 Köln (DE)
(74) Vertreter: Kutzenberger Wolff & Partner

(56) Entgegenhaltungen:
- EP-A1- 3 450 672
- EP-B1- 1 516 410

## Beschreibung

Die Erfindung betrifft eine Sonnenschutzanlage mit einem Sonnenschutzelement, welches mittels eines Antriebsmotors zwischen einer eingefahrenen und einer ausgefahrenen Position verfahrbar ist, wobei die Sonnenschutzanlage eine Steuereinheit zur Ansteuerung und/oder zur Bestromung zumindest des Antriebsmotors aufweist, wobei der Antriebsmotor einen Motorkopf und einen dem Motorkopf gegenüberliegenden Abtrieb aufweist.

Aus der EP 3 450 672 A1 ist eine Sonnenschutzanlage mit einer Tuchwelle bekannt, auf die ein Behang aufwickelbar ist, wobei die Tuchwelle an seitlichen Konsolen abgestützt ist und ein Antriebsmotor, der die Tuchwelle antreibt, an einer ersten Konsole abgestützt ist und in einen inneren Hohlraum der Tuchwelle ragt, wobei eine Steuerung des Antriebsmotors und/oder weiterer elektrischer Verbraucher vorgesehen ist, wobei die Steuerung an der zweiten Konsole festgelegt ist und an dem vom Motor aus gesehen gegenüber liegenden Ende der Tuchwelle in den Hohlraum der Tuchwelle ragt. Problematisch bei dieser Anordnung ist die Verkabelung von Steuerung und Motor, da ein Kabel entweder durch die Tuchwelle oder außen entlang eines Trägers oder Gehäuses verlegt werden muss.

Aus der EP 1 516 410 B1 ist ein rohrförmiger elektrischer Antrieb bekannt, mit einem Rohr, in welchem ein erstes Element mit einem Motor und ein zweites Element aus einer Steuervorrichtung für den Motor eingebracht sind, wobei diese Elemente elektrisch über ein Hilfsverbindungsstück miteinander verbunden sind, welches an einem der Elemente angebracht ist und mit steckbaren Mitteln zur Verbindung ausgestattet ist, welche elektrisch mit dem Element verbunden sind, auf dem das Hilfsverbindungsstück angebracht ist, und wobei das andere Element mit komplementären steckbaren Verbindungsmitteln versehen ist, mit denen dieses Element an die Verbindungsmittel des Hilfsverbindungsstücks angeschlossen ist, wobei das Hilfsverbindungsstück mit einem Winkelspiel auf dem damit ausgerüsteten Element angebracht ist, um eine winkelmässige Positionierung zu ermöglichen, und mit einem axialen Spiel, um vom anderen Element verschoben zu werden, dass es Mittel zur winkelmässigen Positionierung aufweist, und wobei das andere Element Mittel zur winkelmässigen Positionierung besitzt, die mit den Mitteln zur winkelmässigen Positionierung des Hilfsverbindungsstücks zusammenwirken, um die winkelmässige Positionierung dieses Hilfsverbindungsstücks zu erzielen. Nachteilig dabei ist es, dass die Anordnung eines zusätzlichen Hilfsverbindungsstückes einen erheblichen Platzbedarf in einem naturgemäß sehr kleinen Einbauraum erfordert.

Die Aufgabe der Erfindung ist es, diese Nachteile zu überwinden und eine Sonnenschutzanlage anzugeben, bei der eine besonders platzsparende und leicht zu montierende Anordnung von Antriebsmotor und Steuerung ermöglicht ist.

Diese Aufgabe wird erfindungsgemäß durch eine Sonnenschutzanlage gemäß Anspruch 1 gelöst. Vorteilhafte Weiterbildungen der Erfindung sind in den Unteransprüchen angegeben.

Besonders vorteilhaft bei der Sonnenschutzanlage mit einem Sonnenschutzelement, welches mittels eines Antriebsmotors zwischen einer eingefahrenen und einer ausgefahrenen Position verfahrbar ist, wobei die Sonnenschutzanlage eine Steuereinheit zur Ansteuerung und/oder zur Bestromung zumindest des Antriebsmotors aufweist, wobei der Antriebsmotor einen Motorkopf und einen dem Motorkopf gegenüberliegenden Abtrieb aufweist, ist es, dass die Steuereinheit unmittelbar oder mittelbar drehfest mit dem Motorkopf des Antriebsmotors verbunden ist und dass die Steuereinheit die Drehmomentabstützung des Antriebsmotors bildet.

Erfindungsgemäß ist die Steuereinheit unmittelbar oder mittelbar am Motorkopf des Antriebsmotors angeflanscht. Die Steuereinheit bildet somit eine Drehmomentbrücke zwischen dem Antriebsmotor und einem das Drehmoment aufnehmenden Fundament der Sonnenschutzanlage.

Vorzugsweise ist zwischen dem Motorkopf und der Steuereinheit ein Adapter angeordnet, mittels dessen die Steuereinheit drehfest mit dem Motorkopf verbunden ist, insbesondere kann der Adapter formschlüssig und/oder kraftschlüssig und/oder mittels einer Schraubverbindung mit dem Motorkopf verbunden sein.

Die drehfeste Kopplung der Steuereinheit mit dem Motorkopf kann unmittelbar oder mittelbar erfolgen. Insbesondere kann ein Adapter vorgesehen sein, sodass eine Steuereinheit mit verschiedenen Antriebmotoren über jeweils einen Adapter gekoppelt werden kann.

Vorzugsweise wird dabei das während des Verfahrens des Sonnenschutzelementes auftretende Reaktionsdrehmoment des Antriebsmotors über die Steuereinheit mittelbar oder unmittelbar in ein feststehendes Element der Sonnenschutzanlage abgeleitet, mit dem die Steuereinheit im montierten Zustand drehfest gekoppelt ist.

Bevorzugt ist die Steuereinheit formschlüssig und/oder kraftschlüssig mit dem Motorkopf des Antriebsmotors oder einem Adapter verbunden und/oder die Steuereinheit ist mit dem Motorkopf oder einem Adapter mittels zumindest einer Schraubverbindung verbunden. Dabei können auch verschiedene Varianten der drehfesten Kopplung von Steuereinheit und Motorkopf oder einem Adapter miteinander kombiniert sein.

Vorzugsweise handelt es sich bei dem Antriebsmotor um einen Rohrmotor oder einen Blockmotor.

Bevorzugt handelt es sich bei der Sonnenschutzanlage um eine Markise, insbesondere um eine Gelenkarmmarkise oder eine Senkrechtbeschattung oder um eine Wintergartenmarkise mit einem an Führungsschienen geführten Ausfahrprofil oder um eine Faltmarkise, oder um ein Lamellendach oder um eine Jalousie oder um einen Rollladen oder um eine Lamellenstore.

Dadurch, dass die Erfindung bei verschiedenen Antriebsmotoren wie beispielsweise Rohrmotoren oder Blockmotoren zum Einsatz kommen kann, ist ebenfalls eine universelle Anwendung der Erfindung bei verschiedensten Arten von Sonnenschutzanlagen möglich.

Vorzugsweise weist die Steuereinheit ein Modul zum Empfang und zur Verarbeitung von Funksignalen, insbesondere von Funksignalen nach einem oder mehreren standardisierten Kommunikationsprotokollen, auf. Durch die Integration eines Moduls zum Empfang und zur Verarbeitung von Funksignalen kann die Steuereinheit über Funk angesprochen werden und damit kann die Sonnenschutzanlage mittels einer Funkfernbedienung betätigt werden.

Besonders bevorzugt weist die Steuereinheit ein Modul zum Empfang und zur Verarbeitung von Funksignalen nach einem oder mehreren standardisierten Kommunikationsprotokollen auf. Insbesondere kann es sich bei dem standardisierten Kommunikationsprotokoll um Matter oder KNX-RF oder Z-Wave oder WLAN oder eine Kombination mehrerer Kommunikationsprotokolle handeln.

Durch derartige standardisierte Kommunikationsprotokolle ist es möglich, verschiedenste häusliche Anlagen und Einrichtungen mittels standardisierter Protokolle beispielsweise über ein Mobilfunkendgerät und eine entsprechende Applikation auf diesem Mobilfunkendgerät zu betätigen.

Vorzugsweise ist die Steuereinheit dazu eingerichtet, zusätzlich zum Antriebsmotor weitere Verbraucher kabelgebunden und/oder über Funk anzusteuern, insbesondere Beleuchtungseinrichtungen und/oder Beheizungseinrichtungen und/oder einen oder mehrere weitere Antriebsmotoren.

In dieser besonders bevorzugten Ausführungsform ist die Steuereinheit dazu eingerichtet, neben dem Antriebsmotor weitere Verbraucher anzusteuern. Die Ansteuerung weiterer Verbraucher kann dabei kabelgebunden und/oder über Funk erfolgen, so kann beispielsweise die Ansteuerung des Antriebsmotors einer Volantwelle einer Gelenkarmmarkise über Funk erfolgen. In dem Fall, dass der Antriebsmotor der Volantwelle der Gelenkarmmarkise von einem Akkumulator gespeist wird, kann auf das Verlegen eines Kabels zum Antriebsmotor der Volantwelle gänzlich verzichtet werden.

Vorzugsweise ist die Steuereinheit dazu eingerichtet, zusätzlich zum Antriebsmotor weitere Verbraucher zu bestromen, insbesondere Beleuchtungseinrichtungen und/oder Beheizungseinrichtungen und/oder einen oder mehrere weitere Antriebsmotoren. Hierzu ist die Steuereinheit mit weiteren Verbrauchern verbunden und es kann eine direkte Bestromung dieser Verbraucher erfolgen.

Vorzugsweise ist die Steuereinheit dazu eingerichtet, zusätzlich zum Antriebsmotor einen oder mehrere Sensoren zu bestromen und/oder die Steuereinheit ist dazu eingerichtet ist, die Daten eines oder mehrerer Sensoren zu empfangen und auszuwerten und/oder kabelgebunden und/oder über Funk weiterzuleiten.

Die Steuereinheit kann also insbesondere dazu dienen, neben dem Antriebsmotor einen oder mehrere Sensoren, wie beispielsweise Lichtstärkesensoren und/oder Windstärkesensoren und/oder Regensensoren, mit Strom zu versorgen. Alternativ oder kumulativ kann die Steuereinheit ferner dazu eingerichtet sein, die Sensordaten eines oder mehrerer Sensoren zu empfangen und auszuwerten und in Abhängigkeit dieser Sensordaten den Antriebsmotor der Sonnenschutzanlage und/oder weitere Verbraucher der Sonnenschutzanlage anzusteuern.

Ferner besteht alternativ oder kumulativ die Möglichkeit, dass die Steuereinheit die empfangenen Sensordaten kabelgebunden und/oder über Funk weiterleitet, beispielsweise zu einer oder mehreren weiteren Sonnenschutzanlagen. In diesem Fall übernimmt die Steuereinheit ferner die Aufgabe eines Signalwiederholers (engl: Repeater).

Insbesondere kann die Kommunikation zwischen der Steuereinheit und einem oder mehreren Sensoren bidirektional ausgeführt sein, d.h. dass die Steuereinheit dazu eingerichtet sein kann, sowohl Sensordaten zu empfangen als auch Daten an einen oder mehrere Sensoren zu übertragen.

Bevorzugt handelt es sich bei dem Antriebsmotor um einen Rohrmotor, der in eine Tuchwelle der Sonnenschutzanlage eingeschoben wird, wobei der Abtrieb des Antriebsmotors durch einen Laufring gebildet ist, wobei auf den Laufring eine Hülse aufgesteckt ist, mittels derer der Laufring im montierten Zustand drehfest mit der die Hülse umgreifenden Tuchwelle gekoppelt ist. Die Hülse bildet dabei bevorzugt einen Formschluss und/oder Kraftschluss mit der Tuchwelle.

Vorzugsweise weist die Hülse in Achsrichtung einen oder mehrere Längsschlitze auf, sodass die Hülse mittels der Tuchwelle beim Einschieben der Hülse in die Tuchwelle zusammengepresst wird.

Besonders bevorzugt wird durch das Zusammenpressen der Hülse beim Einschieben der Hülse in die Tuchwelle ein drehfester Formschluss zwischen der Hülse und dem Laufring des Antriebsmotors erzeugt.

Vorzugsweise weist der Laufring am Antriebsmotors einen Hinterschnitt auf, wobei durch das Zusammenpressen der Hülse beim Einschieben der Hülse in die Tuchwelle der Hinterschnitt am Laufring des Antriebsmotors durch die Hülse hintergriffen wird, wodurch eine Axialsicherung des Antriebsmotors in der Tuchwelle erzeugt wird.

Bei einer besonders bevorzugten Ausführungsform wird mittels der beim Einschieben in die Tuchwelle zusammengepressten und damit leicht verformten Hülse ein in Umfangsrichtung wirksamer Formschluss mit dem den Abtrieb des Rohrmotors bildenden Laufring des Rohrmotors erzeugt, sodass die Hülse drehfest mit dem Laufring gekoppelt ist, während gleichzeitig die Hülse derart zusammengepresst wird, sodass die Hülse einen Hinterschnitt am Laufring hintergreift und eine Axialsicherung des in die Tuchwelle eingeschobenen Rohrmotors bildet. In diesem Fall hat die Hülse die beiden Funktionen der Übertragung der Drehung des Laufrings auf die Tuchwelle und gleichzeitig die Axialsicherung des Rohrmotors in der Tuchwelle.

Bevorzugt bildet die Hülse mit der Tuchwelle einen Formschluss und/oder einen Kraftschluss. Ein Formschluss kann insbesondere dadurch erzeugt werden, dass die äußere Kontur der Hülse an die innere Kontur der Tuchwelle, die auf der Innenseite einen oder mehrere achsparallel verlaufende Rücksprünge aufweist, angepasst ist. Alternativ oder kumulativ kann zwischen der Tuchwelle und der durch die Tuchwelle beim Einschieben in die Tuchwelle zusammengepressten Hülse ein Kraftschluss ausgebildet sein, wodurch Hülse und Tuchwelle drehfest miteinander gekoppelt sind.

Vorzugsweise übergreift die Hülse im montierten Zustand die Steuereinheit, wobei die auf dem Laufring des Antriebsmotors angeordnete Hülse gegenüber der Steuereinheit frei drehbar ist.

Besonders bevorzugt handelt es sich bei der Sonnenschutzanlage um eine Markise mit einer Tuchwelle und einem darauf aufgewickelten Beschattungselement, wobei die Tuchwelle in Tuchwellenlagern um ihre Achse drehbar gelagert ist und das Beschattungselement beim Ausfahren des Beschattungselementes in Ausfahrrichtung des Beschattungselementes von der Tuchwelle abwickelbar ist und wobei das Beschattungselement beim Einfahren des Beschattungselementes auf der Tuchwelle aufgewickelt wird, wobei die Tuchwelle mittels des an einem Ende axial in die Tuchwelle eingeschobenen Antriebsmotors in Form eines Rohrmotors elektromotorisch angetrieben wird und wobei die Tuchwelle zumindest in Ausfahrrichtung des Beschattungselementes vor- und zurückbewegbar gelagert ist und der Tuchwelle zumindest eine Abstützung zugeordnet ist, an welcher der Tuchballen zumindest bei vollständig aufgewickeltem Beschattungselement anliegt.

Dadurch, dass die Tuchwelle zumindest in Ausfahrrichtung des Beschattungselementes vor- und zurückbewegbar gelagert ist, kann die Position der Tuchwelle jeweils dem Durchmesser des auf der Tuchwelle aufgewickelten Tuchballens angepasst werden, sodass eine Abstützung der Tuchwelle auch bei einem teilweise oder vollständig abgewickelten Beschattungselement möglich ist.

Dadurch ist es gewährleistet, dass der seinen Durchmesser beim Ein- und Ausfahren der Beschattung ändernde Tuchballen, der auf der Tuchwelle aufgewickelt ist, stets an der Abstützung anliegt und hierdurch die Tuchwelle gegen die Gewichtskraft und/oder eine auf das Beschattungselement einwirkende Spannkraft abgestützt wird. Dadurch wird einer Durchbiegung der Tuchwelle unabhängig vom Tuchballendurchmesser entgegengewirkt, wodurch ein optimaler Tuchstand gewährleistet werden kann.

Insbesondere kann die Tuchwelle an ihren Enden in Gleitsteinen gelagert sein, die in Kulissenführungen von Lagerträgern gleiten. Mittels einer derartigen Anordnung kann eine Verschiebbarkeit der Tuchwelle auf eine einfache und verschleißarme Art und Weise ohne großen Montageaufwand gewährleistet werden.In diesem Fall kann die Drehmomentableitung über den Gleitstein erfolgen, der zwar vor- und zurückbewegbar, aber in der Kulissenführung drehgesichert ist.

Insbesondere kann die Tuchwelle in Richtung auf ein Ausfahrprofil vor- und zurückbewegbar sein, wobei die Tuchwelle an ihren Enden in Gleitsteinen gelagert sein kann, die in Kulissenführungen von Lagerträgern gleiten. Das bedeutet, dass die Tuchwelle schwimmend gelagert ist. Mittels einer derartigen schwimmenden Lagerung der Tuchwelle, bei der die Tuchwelle in Richtung auf das Ausfahrprofil vor- und zurückbewegbar ist, ist es gewährleistet, dass der seinen Durchmesser beim Ein- und Ausfahren der Markise ändernde Tuchballen, der auf der Tuchwelle aufgewickelt ist, stets an einer Abstützung wie beispielsweise einer Stützfläche anliegt und hierdurch die Tuchwelle gegen die Gewichtskraft und/oder eine Spannkraft zur Gewährleistung eines optimalen Tuchstandes insbesondere bei horizontal ausfahrenden Markisen abgestützt wird. Hierdurch wird einer Durchbiegung der Tuchwelle unabhängig vom Tuchballendurchmesser entgegengewirkt, wodurch ein optimaler Tuchstand gewährleistet werden kann. Die Technik dieser schwimmenden Lagerung kann sowohl bei horizontal bzw. unter einem Winkel gegenüber der Horizontalen ausfahrbaren Markisen zum Einsatz kommen, als auch bei Senkrechtbeschattungen.

Vorzugsweise weist die Markise ein Gehäuse auf, welches die Tuchwelle aufnimmt, wobei das Gehäuse im eingefahrenen Zustand des Beschattungselementes von einem Ausfahrprofil verschlossen wird. Damit wird nicht nur der optische Eindruck der Markise verbessert, sondern auch der Schutz der Markisenelemente innerhalb des verschlossenen Gehäuses vor Witterungsschäden und/oder Verschmutzung gewährleistet.

Besonders bevorzugt ist die Abstützung innerhalb eines Verstellbereiches verstellbar und festlegbar, insbesondere an beliebiger Stelle innerhalb des Verstellbereiches festlegbar, insbesondere kann die Abstützung innerhalb des Verstellbereiches in vertikaler Richtung und/oder in horizontaler Richtung verstellbar sein.

Ein Ausführungsbeispiel der Erfindung ist in den Figuren dargestellt und wird nachfolgend erläutert. Es zeigen:
- Fig. 1: eine perspektivische Ansicht von Tuchwelle, Antriebsmotor und Steuereinheit im montierten Zustand sowie als Explosionszeichnung,
- Fig. 2: die Steuereinheit in zwei perspektivischen Ansichten,
- Fig. 3: die Seitenansicht von Tuchwelle, Antriebsmotor und Steuereinheit im montierten Zustand sowie als Explosionszeichnung.

Das in den Figuren gezeigte Ausführungsbeispiel zeigt die Erfindung bei einer Sonnenschutzanlage mit einer Tuchwelle 1, wie sie bei einer Markise zum Auf-und Abwickeln eines Markisentuches zum Einsatz kommt. In einer nicht dargestellten Alternative kann die Erfindung ebenso im Zusammenhang mit einem Blockmotor realisiert werden.

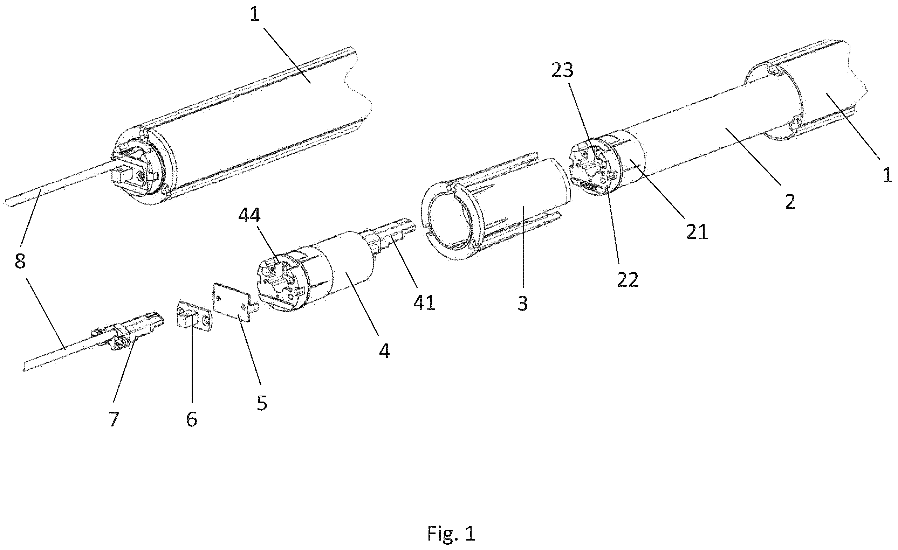

Figur 1 zeigt eine perspektivische Ansicht von Tuchwelle 1, Antriebsmotor 2 und Steuereinheit 4 im montierten Zustand sowie als Explosionszeichnung.

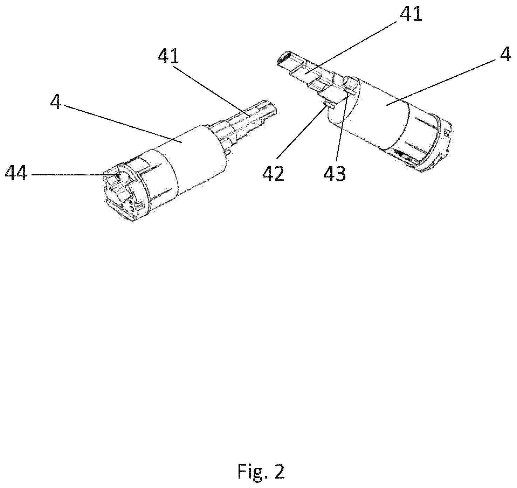

Figur 2 zeigt die Steuereinheit 4 in zwei perspektivischen Ansichten.

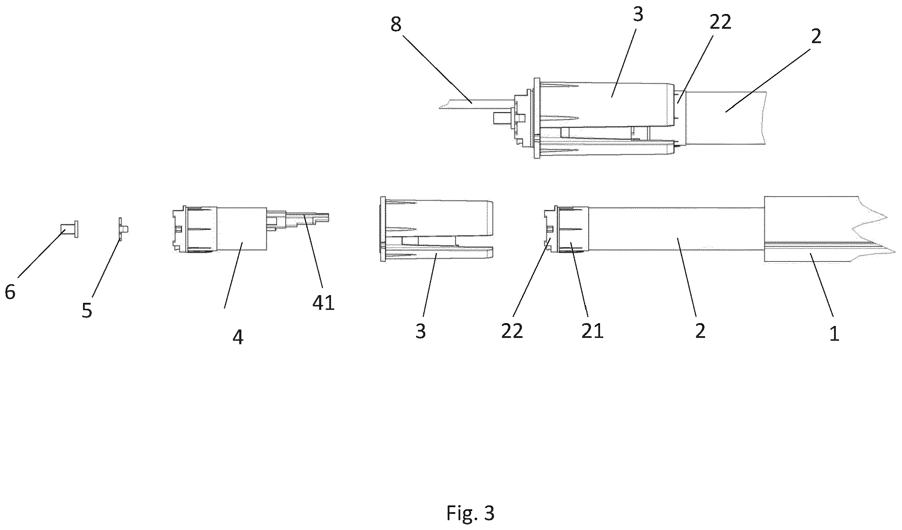

Figur 3 zeigt die Seitenansicht von Tuchwelle 1, Antriebsmotor 2 und Steuereinheit 4 im montierten Zustand sowie als Explosionszeichnung.

In die Tuchwelle 1 wird ein Antriebsmotor 2 eingeschoben, der im dargestellten Ausführungsbeispiel durch einen Rohrmotor gebildet ist. Der Abtrieb des Antriebsmotors 2 ist gebildet durch einen Laufring 21. Das von der Tuchwelle 1 wegweisende Ende des Antriebsmotors 2 ist durch den Motorkopf 22 gebildet, über den das während des Verfahrens des Sonnenschutzelementes auftretende Reaktionsdrehmoment abgeleitet wird.

Auf den Antriebsmotor 2 wird die Hülse 3 aufgeschoben, die durch das Einschieben in die Tuchwelle 1 zusammengepresst wird und einen Formschluss mit dem Laufring 21 des Antriebsmotors 2 bildet. Durch diesen Formschluss zwischen Hülse 3 und Laufring 21 wird eine drehfeste Verbindung zwischen Laufring 21 und Hülse 3 erzeugt. Außenseitig ist die Hülse 3 derart ausgeführt und konturiert, dass diese in dem in die Tuchwelle 1 eingeschobenen Zustand einen Formschluss mit der Tuchwelle 1 bildet, sodass ebenfalls zwischen der Hülse 3 und der Tuchwelle 1 eine drehfeste Verbindung erzeugt wird.

Durch eine Betätigung des Antriebsmotors 2 und somit durch eine Drehung des Laufrings 21 wird die Tuchwelle 1 entsprechend um ihre Längsachse gedreht und es kann in dieser Weise ein auf der Tuchwelle 1 aufgewickeltes Markisentuch abgewickelt bzw. aufgewickelt werden, d.h. das Sonnenschutzelement mittels des Antriebsmotors 2 zwischen einer eingefahrenen und einer ausgefahrenen Position verfahren werden.

Mit dem Motorkopf 22 des Antriebsmotors drehfest verbunden ist die Steuereinheit 4, die der Ansteuerung und Bestromung des Antriebsmotors 2 dient. Hierzu ist die Steuereinheit 4 mit dem Motorkopf 22 formschlüssig verbunden. Dabei greifen die an der dem Motorkopf 22 zugewandten Stirnseite der Steuereinheit 4 angeordneten Stifte 42, 43 in entsprechende Ausnehmungen in dem Motorkopf 22 ein. Die Stifte 42, 43 sind in Figur 2 erkennbar.

Die elektrische Verbindung der Steuereinheit 4 mit dem Antriebsmotor 2 erfolgt über den Stecker 41 der Steuereinheit 4, der im montierten Zustand in die in den Motorkopf 22 integrierte Buchse 23 eingreift.

Die Steuereinheit 4 weist ein Modul zum Empfang und zur Verarbeitung von Funksignalen nach einem oder mehreren standardisierten Kommunikationsprotokollen auf. Die empfangenen Funksignale werden mittels der Steuereinheit 4 unmittelbar in Ansteuerungsbefehle zur Betätigung des Antriebsmotors 2 umgesetzt. Durch die Integration eines Moduls zum Empfang und zur Verarbeitung von Funksignalen kann die Steuereinheit 4 über Funk angesprochen werden und damit kann die Sonnenschutzanlage mittels einer Funkfernbedienung betätigt werden.

Die Stromversorgung der Steuereinheit 4 und über die Steuereinheit 4 ebenfalls des Antriebsmotors 2 erfolgt über einen Stecker 7, der über das Kabel 8 mit einer Stromversorgung verbunden ist. Der Stecker 7 wird in eine entsprechende Aufnahmebuchse 44, die in die Steuereinheit 4 integriert ist, eigesteckt.

Die axiale Sicherung des Steckers 7 in der Aufnahmebuche 44 wird durch eine Zugentlastung 5 gewährleistet. Diese Zugentlastung 5 des Steckers 7 wird nach dem Einstecken des Steckers 7 in die Aufnahmebuchse 44 in der Steuereinheit 4 an der dem Antriebsmotor 2 abwandten Stirnseite der Steuereinheit 4 angeschraubt.

An der Zugentlastung 5 und der dem Antriebsmotor 2 abwandten Stirnseite der Steuereinheit 4 wird ferner ein Vierkant 6 angeschraubt. Durch die Schraubverbindung zwischen dem Vierkant 6 und der Steuereinheit 4 wird eine drehfeste Verbindung zwischen dem Vierkant 6 und der Steuereinheit 4 geschaffen. Da die Steuereinheit 4 wiederrum drehfest mit dem Motorkopf 22 des Antriebsmotors 2 gekoppelt ist, bildet die Steuereinheit somit eine Drehmomentbrücke zwischen dem Antriebsmotor 2 und einem das Drehmoment aufnehmende Fundament der Sonnenschutzanlage.

Es wird somit das während des Verfahrens des Sonnenschutzelementes auftretende Reaktionsdrehmoment des Antriebsmotors 2 über die Steuereinheit 4 mittelbar oder unmittelbar in ein feststehendes Element der Sonnenschutzanlage abgeleitet, mit dem die Steuereinheit 4 im montierten Zustand drehfest gekoppelt ist. Hierzu wird an der Steuereinheit 4 der Vierkant 6 angeschraubt, mittels dessen eine formschlüssige und daher drehfeste Verbindung zu einem in den Figuren nicht dargestellten das Drehmoment aufnehmende Fundament der Sonnenschutzanlage hergestellt wird.

Die im montierten Zustand formschlüssig auf dem Laufring 21 des Antriebsmotors 2 geordnete Hülse 3 umgreift im montierten Zustand die Steuereinheit 4, wobei sich die Hülse 3 um die Steuereinheit 4 in der Hülse 3 frei drehen kann. Die Hülse 3 ist dabei mit mehreren Längsschlitzen ausgestattet, sodass die Hülse 3 beim Einschieben der Anordnung in die Tuchwelle 1 zusammengepresst und dabei soweit verformt werden kann, sodass durch die Innenkonturierung der Hülse 3 ein Formschluss mit dem Außenumfang des Laufrings 21 erzeugt wird, wodurch eine drehfeste Verbindung zwischen dem Laufring 21 des Antriebsmotors 2 und der Hülse 3 geschaffen wird, die ihrerseits wiederrum formschlüssig und drehfest in der die Hülse 3 umgreifenden Tuchwelle einliegt.

Durch das Zusammenpressen und das Verformen der Hülse 3 beim Einschieben in die Tuchwelle 1 kommt ferner die Innenkontur der Hülse 3 mit einem am Laufring angeordneten, umlaufenden Hinterschnitt in Eingriff. Hierdurch wird eine Axialsicherung der gesamten Anordnung aus Hülse 3, Antriebsmotor 2 und Steuereinheit 4 in der Tuchwelle 1 geschaffen.

Bei einer alternativen Ausführungsform sind die Steuereinheit 4 und der Motorkopf 22 des Antriebsmotors 2 miteinander verschraubt. Es können auch ein Formschluss und/oder ein Kraftschluss sowie eine Verschraubung von Steuereinheit 4 und dem Motorkopf 22 des Antriebsmotors 2 miteinander kombiniert sein, um eine drehfeste Verbindung zwischen der Steuereinheit 4 und dem Motorkopf 22 des Antriebsmotors 2 zu schaffen

## Patentansprüche

1. Sonnenschutzanlage mit einem Sonnenschutzelement, welches mittels eines Antriebsmotors (2) zwischen einer eingefahrenen und einer ausgefahrenen Position verfahrbar ist, wobei die Sonnenschutzanlage eine Steuereinheit (4) zur Ansteuerung und/oder zur Bestromung zumindest des Antriebsmotors (2) aufweist, wobei der Antriebsmotor (2) einen Motorkopf (22) und einen Abtrieb (21) aufweist, **dadurch gekennzeichnet, dass** die Steuereinheit (4) unmittelbar oder mittelbar drehfest mit dem Motorkopf (22) des Antriebsmotors (2) verbunden ist und dass die Steuereinheit (4) die Drehmomentabstützung des Antriebsmotors (2) bildet.

2. Sonnenschutzanlage nach Anspruch 1, **dadurch gekennzeichnet, dass** zwischen dem Motorkopf (22) und der Steuereinheit (4) ein Adapter angeordnet ist, mittels dessen die Steuereinheit (4) drehfest mit dem Motorkopf verbunden ist, insbesondere dass der Adapter formschlüssig und/oder kraftschlüssig und/oder mittels einer Schraubverbindung mit dem Motorkopf verbunden ist.

3. Sonnenschutzanlage nach Anspruch 1 oder 2, **dadurch gekennzeichnet, dass** das während des Verfahrens des Sonnenschutzelementes auftretende Reaktionsdrehmoment des Antriebsmotors (2) über die Steuereinheit (4) mittelbar oder unmittelbar in ein feststehendes Element der Sonnenschutzanlage, mit dem die Steuereinheit (4) im montierten Zustand drehfest gekoppelt ist, abgeleitet wird.

4. Sonnenschutzanlage nach einem der vorherigen Ansprüche, **dadurch gekennzeichnet, dass** die Steuereinheit (4) formschlüssig und/oder kraftschlüssig mit dem Motorkopf (22) des Antriebsmotors (2) oder mit einem Adapter verbunden ist und/oder dass die Steuereinheit (4) mit dem Motorkopf (22) oder einem Adapter mittels zumindest einer Schraubverbindung verbunden ist.

5. Sonnenschutzanlage nach einem der vorherigen Ansprüche, **dadurch gekennzeichnet, dass** es sich bei dem Antriebsmotor (2) um einen Rohrmotor oder einen Blockmotor handelt.

6. Sonnenschutzanlage nach einem der vorherigen Ansprüche, **dadurch gekennzeichnet, dass** es sich bei der Sonnenschutzanlage um eine Markise, insbesondere um eine Gelenkarmmarkise oder eine Senkrechtbeschattung oder um eine Wintergartenmarkise mit einem an Führungsschienen geführten Ausfahrprofil oder um eine Faltmarkise, oder um ein Lamellendach oder um eine Jalousie oder um einen Rollladen oder um eine Lamellenstore handelt.

7. Sonnenschutzanlage nach einem der vorherigen Ansprüche, **dadurch gekennzeichnet, dass** die Steuereinheit (4) ein Modul zum Empfang und zur Verarbeitung von Funksignalen, insbesondere von Funksignalen nach einem oder mehreren standardisierten Kommunikationsprotokollen, aufweist.

8. Sonnenschutzanlage nach einem der vorherigen Ansprüche, **dadurch gekennzeichnet, dass** die Steuereinheit (4) dazu eingerichtet ist, zusätzlich zum Antriebsmotor (2) weitere Verbraucher kabelgebunden und/oder über Funk anzusteuern, insbesondere Beleuchtungseinrichtungen und/oder Beheizungseinrichtungen und/oder einen oder mehrere weitere Antriebsmotoren.

9. Sonnenschutzanlage nach einem der vorherigen Ansprüche, **dadurch gekennzeichnet, dass** die Steuereinheit (4) dazu eingerichtet ist, zusätzlich zum Antriebsmotor (2) weitere Verbraucher zu bestromen, insbesondere Beleuchtungseinrichtungen und/oder Beheizungseinrichtungen und/oder einen oder mehrere weitere Antriebsmotoren.

10. Sonnenschutzanlage nach einem der vorherigen Ansprüche, **dadurch gekennzeichnet, dass** die Steuereinheit (4) dazu eingerichtet ist, zusätzlich zum Antriebsmotor (2) einen oder mehrere Sensoren zu bestromen und/oder die Steuereinheit (4) dazu eingerichtet ist, die Daten eines oder mehrerer Sensoren zu empfangen und auszuwerten und/oder kabelgebunden und/oder über Funk weiterzuleiten.

11. Sonnenschutzanlage nach einem der vorherigen Ansprüche, **dadurch gekennzeichnet, dass** es sich bei dem Antriebsmotor (2) um einen Rohrmotor handelt, der in eine Tuchwelle (1) der Sonnenschutzanlage eingeschoben wird, wobei der Abtrieb des Antriebsmotors (2) durch einen Laufring (21) gebildet ist, wobei auf den Laufring (21) eine Hülse (3) aufgesteckt ist, mittels derer der Laufring (21) im montierten Zustand drehfest mit der die Hülse (3) umgreifenden Tuchwelle (1) gekoppelt ist.

12. Sonnenschutzanlage nach Anspruch 11, **dadurch gekennzeichnet, dass** die Hülse (3) in Achsrichtung einen oder mehrere Längsschlitze aufweist, sodass die Hülse (3) mittels der Tuchwelle (1) beim Einschieben der Hülse (3) in die Tuchwelle (1) zusammengepresst wird, insbesondere dass durch das Zusammenpressen der Hülse (3) beim Einschieben der Hülse (3) in die Tuchwelle (1) ein drehfester Formschluss zwischen der Hülse (3) und dem Laufring (21) des Antriebsmotors (2) erzeugt wird.

13. Sonnenschutzanlage nach Anspruch 11 oder 12, **dadurch gekennzeichnet, dass** der Laufring (21) am Antriebsmotor (2) einen Hinterschnitt aufweist, wobei durch das Zusammenpressen der Hülse (3) beim Einschieben der Hülse (3) in die Tuchwelle (1) der Hinterschnitt am Laufring (21) des Antriebsmotors (2) durch die Hülse (3) hintergriffen wird, wodurch eine Axialsicherung des Antriebsmotors (2) in der Tuchwelle (1) erzeugt wird.

14. Sonnenschutzanlage nach einem der Ansprüche 11 bis 13, **dadurch gekennzeichnet, dass** die Hülse (3) mit der Tuchwelle (1) einen Formschluss und/oder einen Kraftschluss bildet.

15. Sonnenschutzanlage nach einem der Ansprüche 11 bis 14, **dadurch gekennzeichnet, dass** die Hülse (3) im montierten Zustand die Steuereinheit (4) übergreift, wobei die auf dem Laufring (21) des Antriebsmotors (2) angeordnete Hülse (3) gegenüber der Steuereinheit (4) frei drehbar ist.

## Claims

1. Sun protection system comprising a sun protection element which is movable, by means of a drive motor (2), between a retracted position and an extended position, wherein the sun protection system comprises a control unit (4) for actuating and/or supplying power to at least the drive motor (2), wherein the drive motor (2) has a motor head (22) and an output drive (21), ***characterized in that*** the control unit (4) is connected, directly or indirectly, to the motor head (22) of the drive motor (2) in a rotationally fixed manner, and **in that** the control unit (4) forms the torque support of the drive motor (2).

2. Sun protection system according to Claim 1, ***characterized in that*** an adapter is arranged between the motor head (22) and the control unit (4), by means of which the control unit (4) is connected to the motor head in a rotationally fixed manner, in particular **in that** the adapter is connected to the motor head in a form-fitting and/or force-fitting manner and/or by means of a screw connection.

3. Sun protection system according to Claim 1 or 2, ***characterized in that*** the reaction torque of the drive motor (2) occurring during actuation of the sun protection element is dissipated, directly or indirectly via the control unit (4), into a stationary element of the sun protection system to which the control unit (4) is coupled in a rotationally fixed manner in the mounted state.

4. Sun protection system according to any one of the preceding claims, ***characterized in that*** the control unit (4) is connected to the motor head (22) of the drive motor (2) or to an adapter in a form-fitting and/or force-fitting manner, and/or **in that** the control unit (4) is connected to the motor head (22) or to an adapter by means of at least one screw connection.

5. Sun protection system according to any one of the preceding claims, ***characterized in that*** the drive motor (2) is a tubular motor or a box-type motor.

6. Sun protection system according to any one of the preceding claims, ***characterized in that*** the sun protection system is an awning, in particular a folding-arm awning or a vertical screen, or a winter-garden awning having an extension profile guided on guide rails, or a fold-up awning, or a louvre roof, or a venetian blind, or a roller shutter, or a louvre blind.

7. Sun protection system according to any one of the preceding claims, ***characterized in that** the* control unit (4) has a module for receiving and processing radio signals, in particular radio signals according to one or more standardized communication protocols.

8. Sun protection system according to any one of the preceding claims, ***characterized in that** the* control unit (4) is configured to actuate, in addition to the drive motor (2), further consumers in a wired manner and/or by radio, in particular lighting devices and/or heating devices and/or one or more further drive motors.

9. Sun protection system according to any one of the preceding claims, ***characterized in that** the* control unit (4) is configured to supply power, in addition to the drive motor (2), to further consumers, in particular lighting devices and/or heating devices and/or one or more further drive motors.

10. Sun protection system according to any one of the preceding claims, ***characterized in that** the* control unit (4) is configured to supply power, in addition to the drive motor (2), to one or more sensors and/or the control unit (4) is configured to receive and evaluate the data of one or more sensors and/or to forward the data in a wired manner and/or by radio.

11. Sun protection system according to any one of the preceding claims, ***characterized in that*** the drive motor (2) is a tubular motor which is inserted into a roller tube (1) of the sun protection system, wherein the output drive of the drive motor (2) is formed by a running ring (21), wherein a sleeve (3) is fitted onto the running ring (21), by means of which the running ring (21) is coupled, in the mounted state, in a rotationally fixed manner to the roller tube (1) surrounding the sleeve (3).

12. Sun protection system according to Claim 11, ***characterized in that*** the sleeve (3) has, in the axial direction, one or more longitudinal slots, such that the sleeve (3) is compressed by the roller tube (1) when the sleeve (3) is inserted into the roller tube (1), in particular **in that**, by compressing the sleeve (3) when the sleeve (3) is inserted into the roller tube (1), a rotationally fixed form-fit is produced between the sleeve (3) and the running ring (21) of the drive motor (2).

13. Sun protection system according to Claim 11 or 12, ***characterized in that*** the running ring (21) has a recess on the drive motor (2), wherein, by compressing the sleeve (3) when the sleeve (3) is inserted into the roller tube (1), the recess on the running ring (21) of the drive motor (2) is engaged behind by the sleeve (3), whereby an axial retention of the drive motor (2) in the roller tube (1) is produced.

14. Sun protection system according to any one of Claims 11 to 13, ***characterized in that*** the sleeve (3) forms a form-fit and/or a force-fit with the roller tube (1).

15. Sun protection system according to any one of Claims 11 to 14, ***characterized in that*** the sleeve (3), in the mounted state, overlaps the control unit (4), wherein the sleeve (3), arranged on the running ring (21) of the drive motor (2), is freely rotatable relative to the control unit (4).

## Revendications

1. Installation de protection solaire comportant un élément de protection solaire qui est déplaçable, au moyen d'un moteur d'entraînement (2), entre une position rentrée et une position sortie, l'installation de protection solaire comportant une unité de commande (4) pour la commande et/ou l'alimentation en courant électrique d'au moins le moteur d'entraînement (2), le moteur d'entraînement (2) présentant une tête de moteur (22) et une sortie d'entraînement (21), ***caractérisée en ce que*** l'unité de commande (4) est reliée directement ou indirectement, de manière solidaire en rotation, à la tête de moteur (22) du moteur d'entraînement (2), et **en ce que** l'unité de commande (4) forme l'appui de couple du moteur d'entraînement (2).

2. Installation de protection solaire selon la revendication 1, ***caractérisée en ce qu'***un adaptateur est disposé entre la tête de moteur (22) et l'unité de commande (4), au moyen duquel l'unité de commande (4) est reliée de manière solidaire en rotation à la tête de moteur, en particulier **en ce que** l'adaptateur est relié à la tête de moteur par complémentarité de formes et/ou par adhérence et/ou au moyen d'un assemblage vissé.

3. Installation de protection solaire selon la revendication 1 ou 2, ***caractérisée en ce que*** le couple de réaction du moteur d'entraînement (2) apparaissant pendant le déplacement de l'élément de protection solaire est dérivé, directement ou indirectement par l'intermédiaire de l'unité de commande (4), vers un élément fixe de l'installation de protection solaire auquel l'unité de commande (4) est couplée de manière solidaire en rotation à l'état monté.

4. Installation de protection solaire selon l'une des revendications précédentes, ***caractérisée en ce que*** l'unité de commande (4) est reliée à la tête de moteur (22) du moteur d'entraînement (2) ou à un adaptateur par complémentarité de formes et/ou par adhérence, et/ou **en ce que** l'unité de commande (4) est reliée à la tête de moteur (22) ou à un adaptateur au moyen d'au moins un assemblage vissé.

5. Installation de protection solaire selon l'une des revendications précédentes, ***caractérisée en ce qu'***il s'agit, pour le moteur d'entraînement (2), d'un moteur tubulaire ou d'un moteur monobloc.

6. Installation de protection solaire selon l'une des revendications précédentes, ***caractérisée en ce qu'***il s'agit, pour l'installation de protection solaire, d'un store, en particulier d'un store à bras articulés ou d'un store vertical, ou d'un store de jardin d'hiver comportant un profilé de sortie guidé sur des rails de guidage, ou d'un store pliant, ou d'un toit à lamelles, ou d'un store vénitien, ou d'un volet roulant, ou d'un store à lamelles.

7. Installation de protection solaire selon l'une des revendications précédentes, ***caractérisée en ce que*** l'unité de commande (4) comporte un module de réception et de traitement de signaux radio, en particulier de signaux radio selon un ou plusieurs protocoles de communication normalisés.

8. Installation de protection solaire selon l'une des revendications précédentes, ***caractérisée en ce que*** l'unité de commande (4) est conçue pour commander, en plus du moteur d'entraînement (2), d'autres consommateurs de manière filaire et/ou par radio, en particulier des dispositifs d'éclairage et/ou des dispositifs de chauffage et/ou un ou plusieurs autres moteurs d'entraînement.

9. Installation de protection solaire selon l'une des revendications précédentes, ***caractérisée en ce que*** l'unité de commande (4) est conçue pour alimenter en courant électrique, en plus du moteur d'entraînement (2), d'autres consommateurs, en particulier des dispositifs d'éclairage et/ou des dispositifs de chauffage et/ou un ou plusieurs autres moteurs d'entraînement.

10. Installation de protection solaire selon l'une des revendications précédentes, ***caractérisée en ce que*** l'unité de commande (4) est conçue pour alimenter en courant électrique, en plus du moteur d'entraînement (2), un ou plusieurs capteurs et/ou l'unité de commande (4) est conçue pour recevoir et exploiter les données d'un ou plusieurs capteurs et/ou pour les transmettre de manière filaire et/ou par radio.

11. Installation de protection solaire selon l'une des revendications précédentes, ***caractérisée en ce qu'***il s'agit, pour le moteur d'entraînement (2), d'un moteur tubulaire qui est inséré dans un tube d'enroulement (1) de l'installation de protection solaire, la sortie d'entraînement du moteur d'entraînement (2) étant formée par une bague d'entraînement (21), un manchon (3) étant emmanché sur la bague d'entraînement (21), au moyen duquel la bague d'entraînement (21) est couplée, à l'état monté, de manière solidaire en rotation au tube d'enroulement (1) entourant le manchon (3).

12. Installation de protection solaire selon la revendication 11, ***caractérisée en ce que*** le manchon (3) présente, dans la direction axiale, une ou plusieurs fentes longitudinales, de sorte que le manchon (3) est comprimé par le tube d'enroulement (1) lors de l'insertion du manchon (3) dans le tube d'enroulement (1), en particulier **en ce qu'**une liaison par complémentarité de formes solidaire en rotation est créée entre le manchon (3) et la bague d'entraînement (21) du moteur d'entraînement (2) par la compression du manchon (3) lors de l'insertion du manchon (3) dans le tube d'enroulement (1).

13. Installation de protection solaire selon la revendication 11 ou 12, ***caractérisée en ce que*** la bague d'entraînement (21) présente, sur le moteur d'entraînement (2), une contre-dépouille, la contre-dépouille de la bague d'entraînement (21) du moteur d'entraînement (2) étant prise en sous-face par le manchon (3) par la compression du manchon (3) lors de l'insertion du manchon (3) dans le tube d'enroulement (1), ce qui crée un blocage axial du moteur d'entraînement (2) dans le tube d'enroulement (1).

14. Installation de protection solaire selon l'une des revendications 11 à 13, ***caractérisée en ce que*** le manchon (3) forme une liaison par complémentarité de formes et/ou une liaison par adhérence avec le tube d'enroulement (1).

15. Installation de protection solaire selon l'une des revendications 11 à 14, ***caractérisée en ce que*** le manchon (3), à l'état monté, chevauche l'unité de commande (4), le manchon (3), disposé sur la bague d'entraînement (21) du moteur d'entraînement (2), étant librement rotatif par rapport à l'unité de commande (4).
